# NEW EUROPEAN PATENT SPECIFICATION

(11) **EP 0 898 602 B2**
(45) Date of publication and mention of the opposition decision: **05.11.2008**
(45) Mention of the grant of the patent: 13.04.2005
(21) Application number: 97926503.0
(22) Date of filing: 14.05.1997
(51) Int. Cl.: C09D 201/02

(54) **MAR-RESISTANT OLIGOMERIC-BASED COATINGS**
KRATZFESTE ÜBERZUGSMITTEL AUF DER BASIS VON OLIGOMEREN
REVETEMENTS A BASE D'OLIGOMERES RESISTANTS A L'ENDOMMAGEMENT

(30) Priority: 17.05.1996 US 650079
(43) Date of publication of application: 03.03.1999
(73) Proprietor: E.I. DU PONT DE NEMOURS AND COMPANY, Wilmington, DE 19898 (US)
(72) Inventor: BARSOTTI, Robert, John, Franklinville, NJ 08322 (US); HAZAN, Isidor, Clementon, NJ 08021 (US); NEFF, Bruce, Lyle, Wilmington, DE 19810 (US)
(74) Representative: Kuhnen & Wacker
(86) International application number: PCT/US1997/008179
(87) International publication number: WO 1997/044402

(56) References cited:
- WO-A-96/01864
- WO-A-96/20968
- CA-A- 1 318 075
- GB-A- 1 528 802
- US-A- 4 379 906
- US-A- 4 384 103
- US-A- 4 960 828
- Hardcopy of OSHA Internet site relating to biuret of hexamethylene diisocyanate.
- Material Safety Data Sheet of Autoclear III
- Hardcopy of Internet site of King Industries describing Nacure catalysts
- Resins for Coatings, D.Stoye, W.Freitag (editors), Hanser Publishers

## Description

The present invention relates to a curable coating composition particularly useful as a topcoat in multi-layered coating systems.

Basecoat-clearcoat systems have found wide acceptance in the past decade as automotive finishes. Continuing effort has been directed to such coating systems to improve the overall appearance, the clarity of the topcoat, and the resistance to deterioration. Further effort has been directed to the development of coating compositions having low volatile organic content (VOC). A continuing need exists for coating formulations which provide outstanding performance characteristics after application, and particularly mar-resistance and resistance to environmental etching. Heretofore, mar-resistant coatings were attained by softening the coating, which depreciates other performance characteristics. The instant invention overcomes this problem.

The document WO 96/01,864 relates to a coating composition based on a low molecular weight anhydride resin having pendant anhydride moieties, an hydroxyfunctional epoxy resin and a catalyst, which composition, when applied to a substrate, exhibits excellent performance characteristics including a low content of volatile organic components.

This invention concerns a curable coating composition of a binder in an organic solvent, the composition having a volatile organic content not exceeding 0.4 kilograms per liter, consisting essentially of at least one solvent and
(i) a binder selected from a linear or branched cycloaliphatic moiety-containing oligomer or blend of oligomers with a weight average molecular weight not exceeding 3,000, a polydispersity not exceeding 1.5 and functionality A or A plus B; and
(ii) an oligomeric crosslinker or blend of crosslinkers with a weight average molecular weight not exceeding 3,000 and functionality C;
components (i) and (ii) reacting at cure to form a three-dimensional network having chains of substantially uniform, controllable molecular weight between crosslinks; wherein
the functionalities in components (i) and (ii) are selected from the group consisting of: A is hydroxyl and C is isocyanate; A is hydroxyl and C is melamine; A is aldimine or ketimine, B is optionally hydr-oxyl and C is isocyanate; A is silane, B is hydroxyl and C is melamine; A is silane, B is hydroxyl and C is isocyanate; and A is silane and C is silane, and wherein when A is hydroxyl the oligomers are prepared by reacting multifunctional alcohols selected from the group consisting of pentaerithritol and trimethylol propane with cyclic monomeric anhydrides to form said acid oligomers with monofunctional epoxides selected from the group contisting of butylene oxide and propylene oxide.

The invention also relates to a method for coating a substrate comprising applying to the substrate a composition as outlined above and curing said composition.

The invention finally also relates a substrate coated with a composition as outlined above.

This invention concerns In the compositions of the invention, components i and ii react at cure to form a three-dimensional network having chains of substantially uniform, controllable molecular weight between crosslinks.

The functionalities in oligomeric components i and ii of the invention are as follows:

| COMPONENT (i) | COMPONENT (ii) |
|---|---|
| A = hydroxyl | C = isocyanate |
| A = hydroxyl | C = melamine |
| A = aldimine | C = isocyanate |
| A = aldimine; B = hydroxyl | C = isocyanate |
| | |
| A = ketimine | C = isocyanate |
| A = ketimine; B = hydroxyl | C = isocyanate |
| | |
| A = silane | C = silane |
| A = silane; B = hydroxyl | C = melamine |
| A = silane; B = hydroxyl | C = isocyanate |

The compositions of this invention, comprising (i) plus (ii), may also contain up to a total of about 30% based on the total binder of a noncyclic oligomer and/or an acrylic polymer and/or a dispersed macromolecular polymer as described in more detail hereafter. This invention also concerns a method for coating a substrate comprising applying the disclosed composition thereto and curing the composition; as well as a substrate coated with the composition. The term "isocyanate(s)" employed herein includes blocked isocyanate(s) as well.

The compositions of this invention form structured polymer networks of high hardness and excellent mar resistance. The functionality of these oligomers is predictably (nonrandomly) located versus polymers in which functionality is randomly distributed and whose polydispersities generally exceed 2.0. By "polydispersity" is meant weight average molecular weight divided by number average molecular weight, both measured by gel permeation chromotography. In compositions of this invention, molecular weight between crosslinks can be controlled to form more uniform networks minimizing short, embrittling lengths and long, softening lengths; minimizing soluble non-functional materials in the network and maximizing the toughness of the films (energy to break). These systems develop open networks with high molecular weight between crosslinks, vs. polymeric systems, at relatively high Tg's.

The Tg of these systems can be controlled to give a maximum balance of mar, hardness, durability, and etch. In measuring Tg of crosslinked films made from compositions of this invention using dynamic mechanical analysis, the Tg regime is characterized by a steep slope versus a gradual slope for a random system based on polymers. The reactivity of these systems is such that complete reaction is attainable to minimize hydrophilic groups. These systems are typically baked at 120° to 141°C (250° to 285°F), but can be cured at lower temperatures through the use of more reactive groups and catalysis.

Representative of the functionalized oligomers that can be employed as component i or ii are the following:
Acid Oligomers: The reaction product of multifunctional alcohols selected from the group consisting of pentaerythritol and trimethylol propane with cyclic monomeric anhydrides such as hexahydrophthalic anhydride, methylhexhydrophthalic anhydride, and the like.

Hydroxyl Oligomers: The above acid oligomers further reacted with monofunctional epoxies such as butylene oxide, propylene oxide.

Silane Oligomers: The above hydroxyl oligomers further reacted with isocyanato propyl trimethoxy silane.

Isocyanate Oligomers: The isocyanurate trimer of hexamethylene diisocyanate, DESMODURR 3300 from Bayer or Tolonate HDTâ from Rhone-Poulenc, and the isocyanurate trimer of isophorone diisocyanate, and the like.

Aldimine Oligomers: The reaction product of isobutyraldehyde with diamines such as isophorone diamine, and the like.

Ketimine Oligomers: The reaction product of methyl isobutyl ketone with diamines such as isophorone diamine.

Melamine Oligomers: Commercially available melamines such as CYMELR 1168 from Cytec Industries, and the like.

The compositions of this invention may additionally contain up to 30% by weight of binder of a noncyclic oligomer, i.e., one that is linear or aromatic.

The oligomers (i) have a weight average molecular weight not exceeding about 3,000 with a polydispersity not exceeding about 1.5; preferred oligomers have molecular weight not exceeding about 2,500 and polydispersity not exceeding about 1.4; most preferred oligomers have molecular weight not exceeding about 2,200, and polydisperity not exceeding about 1.25. Typically, the compositions comprise 20-80 weight percent of (i), preferably 30 to 70 weight percent and more preferably 40 to 60 weight percent, with the balance being (ii).

The present coating composition can further comprise a functional amount of catalyst, generally about 0.1 to 5 weight percent, based on the weight of solids in the formulation. A wide variety of catalysts can be used, such as dibutyl tin dilaurate for isocyanate based reactions, tertiary amines such as triethylenediamine or phosphonium based catalysts for epoxy reaction and sulfonic acids, such as dodecylbenzene sulfonic acid for melamine reactions.

The coating compositions of the present invention are formulated into high solids coating systems dissolved in at least one solvent. The solvent is usually organic. Preferred solvents include aromatic hydrocarbons such as petroleum naphtha or xylenes; ketones such as methyl amyl ketone, methyl isobutyl ketone, methyl ethyl ketone or acetone; esters such as butyl acetate or hexyl acetate; and glycol ether esters such as propylene glycol monomethyl ether acetate.

The coating compositions of the present invention can also contain up to 30% of total binder of an acrylic polymer of weight average molecular weight greater than 3,000, or a conventional polyester such as SCDR - 1040 from Etna Product Inc. for improved appearance, sag resistance, flow and leveling and such. The acrylic polymer can be composed of typical monomers such as acrylates, methacrylates, styrene and the like and functional monomers such as hydroxy ethyl acrylate, glycidyl methacrylate, or gamma methacrylyl propyl trimethoxy silane and the like.

The coating compositions of the present invention can also contain up to 30% of total binder of a dispersed acrylic component which is a polymer particle dispersed in an organic media, which particle is stabilized by what is known as steric stabilization. Hereafter, the dispersed phase or particle, sheathed by a steric barrier, will be referred to as the "macromolecular polymer" or "core". The stabilizer forming the steric barrier, attached to this core, will be referred to as the "macromonomer chains" or "arms".

The dispersed polymer contains about 10 to 90%, preferably 50 to 80%, by weight, based on the weight of the dispersed polymer, of a high molecular weight core having a weight average molecular weight of about 50,000 to 500,000. The preferred average particle size is 0.1 to 0.5 µm (microns) The arms, attached to the core, make up about 10 to 90%, preferably 10 to 59%, by weight of the dispersed polymer, and have a weight average molecular weight of about 1,000 to 30,000, preferably 1,000 to 10,000.

The macromolecular core of the dispersed polymer is comprised of polymerized acrylic monomer(s) optionally copolymerized with ethylenically unsaturated monomer(s). Suitable monomers include styrene, alkyl acrylate or methacrylate, ethylenically unsaturated monocarboxylic acid, and/or silane-containing monomers. Such monomers as methyl methacrylate contribute to a high Tg (glass transition temperature) dispersed polymer, whereas such "softening" monomers as butyl acrylate or 2-ethylhexylacrylate contribute to a low Tg dispersed polymer. Other optional monomers are hydroxyalkyl acrylates or methacrylates or acrylonitrile. Optionally, the macromolecular core can be crosslinked through the use of diacrylates or dimethacrylates such as allyl methacrylate or post reaction of hydroxyl moieties with polyfunctional isocyanates.

The macromonomer arms attached to the core can contain polymerized monomers of alkyl methacrylate, alkyl acrylate, each having 1 to 12 carbon atoms in the alkyl group, as well as glycidyl acrylate or glycidyl methacrylate or ethylenically unsaturated monocarboxylic acid for anchoring and/or crosslinking. Typically useful hydroxy-containing monomers are hydroxy alkyl acrylates or methacrylates as described above.

The coating compositions of the present invention can also contain conventional additives such as pigments, stabilizers, rheology control agents, flow agents, toughening agents and fillers. Such additional additives will, of course, depend on the intended use of the coating composition. Fillers, pigments, and other additives that would adversely effect the clarity of the cured coating will not be included if the composition is intended as a clear coating.

The coating compositions are typically applied to a substrate by conventional techniques such as spraying, electrostatic spraying, roller coating, dipping or brushing. The present formulations are particularly useful as a clear coating for outdoor articles, such as automobile and other vehicle body parts. The substrate is generally prepared with a primer and or a color coat or other surface preparation prior to coating with the present compositions.

After application to a substrate, the present compositions can be cured by heating to a temperature of about 120°-150°C for a period of about 15 to 90 minutes.

The present invention is further illustrated by the following Procedures and Examples, in which parts and percentages are by weight unless otherwise indicated. VOC determinations are made by the procedure of ASTM method D3960.

### Procedure 1

### TETRA HYDROXYL FUNCTIONAL OLIGOMER

### Preparation of Acid Oligomer

To a 12-liter flask fitted with an agitator, condenser, heating mantle, nitrogen inlet, thermocouple and an addition port was added 2447.2 g of propylene glycol monomethylether acetate, 792.4 g of erythritol and 1.36 g of triethylamine. The reaction mixture was agitated and heated to 140°C under a nitrogen blanket at which time 3759 g of methyl hexahydrophthalic anhydride was added over 6 h. The reaction mixture was then held at 140°C until no anhydride bands were observed on an infrared spectroscopic trace.

### Preparation of Diol

To a 5-liter flask fitted with an agitator, condenser, heating mantle, nitrogen inlet, thermocouple and an addition port was added 2798.4 g of acid oligomer prepared above and 2.76 g of triethylamine. The mixture was agitated and heated to 60°C under nitrogen. Then, 696.9 g of 1,2-epoxy butane was added over 120 min, after which the temperature was raised to 105°C and held at that temperature until the acid number dropped to about 10 or less. Percent weight solids were 71.5, Gardner viscosity V, number average molecular weight 895 and weight average molecular weight 1022 as determined by GPC (polystyrene standard).

### Procedure 2 (reference)

### DI HYDROXYL FUNCTIONAL OLIGOMER

### Preparation of Acid Oligomer

To a 12-liter flask fitted with an agitator, condenser, heating mantle, nitrogen inlet, thermocouple and an addition port was added 2434.5 g of propylene glycol monomethylether acetate, 1222.5 g of hexane diol and 1.37 g of triethylamine. The reaction mixture was agitated and heated to 140°C under a nitrogen blanket at which time 3341.6 g of methyl hexahydrophthalic anhydride was added over 6 h. The reaction mixture was then held at 140°C until no anhydride bands were observed on an infrared spectroscopic trace.

### Preparation of Oligomeric Diol

To a 5-liter flask fitted with an agitator, condenser, heating manntle, nitrogen inlet, thermocouple and an addition port was added 2020.4 g of acid oligomer prepared above and 2.45 g of triethylamine. The mixture was agitated and heated to 60°C under nitrogen. Then, 478.3 g of 1,2-epoxy butane was added over 120 min, after which the temperature was raised to 105°C and held at that temperature until the acid number dropped to about 10 or less. Percent weight solids were 69.5, Gardner viscosity A, number average molecular weight 679 and weight average molecular weight 770 as determined by GPC (polystyrene standard).

### Procedure 3

### HYDROXYL/SILANE OLIGOMER

The oligomer from Procedure 2 was further reacted by mixing

| | |
|---|---|
| di hydroxyl functional oligomer | 250 |
| isocyanato propyl trimethoxy silane | 60.9 |
| 1% dibutyl tin dilaurate in methylethyl ketone (MEK) | 0.25 |

The above mixture was heated at 60°C for 3 days. The completion of the reaction was monitored by infra red spectroscopy. The reaction was complete when there was essentially no isocyanate absorption in the IR.

### Example 1 (reference)

| ISOCYANATE CLEAR | |
|---|---|
| Part I | Parts by Weight |
| tetra hydroxyl functional oligomer (Procedure 1) | 217.71 |
| di hydroxyl functional oligomer (Procedure 2) | 149.24 |
| propylene glycol mono methyl ether acetate (PM acetate) | 26.14 |
| TinuvinR 384 (UV screener from Ciba Geigy) | 8.94 |
| TinuvinR 292 (hindered amine light stabilizer from Ciba Geigy) 10% BYK - 301R (flow additive from BYK Chemie) in PM acetate | 6.72 1.78 |
| 10% di butyl tin dilaurate in methyl ethyl ketone | 1.12 |
| butyl acetate | 52.27 |
| | |

| Part II | |
|---|---|
| TolonateR HDT (isocyanurate trimer of hexamethylene diisocyanate from Rhone-Poulenc) | 192.23 |

This coating was sprayed over a black waterborne basecoat which had already received a warm air flash of 5 min at 82°C (180°F). The coating was cured for 30 min at 141°C (285°F). The coating exhibited excellent appearance, hardness and mar resistance. This coating exhibited higher hardness and significantly better mar resistance than a standard coating made at a similar final film Tg using a routine hydroxyl functional acrylic polymer (6,000 weight average molecular weight polymer with 32% hydroxy ethyl acrylate). The acrylic resin was substituted for the oligomer on an equivalent basis.

| PROPERTY | OLIGOMERIC 2K CLEAR | POLYMERIC 2K CLEAR |
|---|---|---|
| Glass Transition Temperature¹ | 42.7°C | 48.1°C |
| Hardness² | 141 N/mm² | 130 N/mm² |
| Wet mar³ | 80% | 50.6% |
| Dry mar⁴ | 94.2% | 65.5% |

| | | |
|---|---|---|
| 1 - as measured by differential scanning calorimetry | | |
| 2 - as measured using a FischerscopeÒ hardness tester (the measurement is in Newtons per square millimeter) | | |
| 3 - the surface of a panel is marred using a 3% slurry of aluminum oxide in water and a felt pad, the marring is accomplished using a DaieiR Rub Tester. The test uses 10 cycles with a weight of 500 g. The rating shown is the percent of the surface which is not marred as measured by image analysis. | | |
| 4 - the surface of a panel is marred using Bon AmiR Cleanser and a felt pad, the marring is accomplished using a DaieiR Rub Tester. The test uses 15 cycles with a weight of 700 g. The rating shown is the percent of the surface which is not marred as measured by image analysis. | | |

### Example 2 (reference)

| MELAMINE CLEAR | | |
|---|---|---|
| Part I | | Parts by Weight |
| tetra hydroxyl functional oligomer | | 16.1 |
| | (Procedure 1) | |
| dihydroxyl functional oligomer di hydroxyl functional oligomer | | 16.6 |
| | (Procedure 2) | |
| CymelR 1168 (melamine from Cytec Ind.) | | 16.1 |
| 20% BYK-301R (flow additive from BYK Chemie) in PM acetate | | 0.4 |
| catalyst solution* | | 0.8 |
| | | |
| *catalyst solution | | |
| | CycatR 600 (sulfonic acid from American Cyanamid) | 48.0 |
| | AMP-95R (amine from Angus Chemical) | 10.8 |
| | methanol | 41.2 |

This coating was applied over a black waterborne basecoat which had already received a warm air flash of 5 min at 82°C. The coating was cured for 30 min at 141°C. This coating exhibited good appearance, hardness, and mar resistance.

### Example 3

| SILANE (a) /HYDROXYL (b) /ISOCYANATE (c) | |
|---|---|
| Part I | Parts by Weight |
| tetra hydroxyl functional oligomer (Procedure 1) | 243.5 |
| hydroxyl/silane oligomer (Procedure 3) | 175.9 |
| TinuvinR 384 (UV screener from Ciba Geigy) | 9.47 |
| TinuvinR 292 (hindered amine light stabilier from Ciba Geigy) | 6.97 |
| 10% BYK-30R (flow additive from BYK Chemie) in PM acetate | 3.29 |
| 10% di butyl tin dilaurate in butyl acetate | 1.04 |
| butyl acetate | 26.3 |
| PM acetate | 26.3 |
| | |

| Part II | |
|---|---|
| TolonateR HDT (isocyanurate trimer of hexamethylene diisocyanate from Rhone-Poulenc) | 157.2 |

This coating was sprayed over a black waterborne basecoat which had already received a warm air flash of 5 min at 82°C. The coating exhibited excellent appearance, hardness and mar resistance.

### Example 4

### A.) Nonaqueous Dispersion

To a 5-liter flask fitted with a agitator, thermometer, condenser and addition funnels was added the following ingredients. The mixture was agitated under nitrogen and temperature raised to reflux (100° to 104°C). Ingredients are given in parts by weight (to the nearest whole number, for most). The dispersed polymer is 63.5% weight solids in toluene having a weight average molecular weight of 8100. The composition was as follows:
STY/BA/BMA/HEA/MAA/GMA (14.7/43.6/27.5/10.1/2.3/1.7)

| | |
|---|---|
| dispersed polymer | 206 |
| isopropanol | 12 |
| spirits | 94 |
| heptane | 53 |
| butanol | 3 |

Added as a shot at reflux was t-butyl peroctoate (0.5 parts) and mineral spirits (5 parts). Then, the following ingredients were added over a 210 minute period at reflux:

| | |
|---|---|
| styrene | 52 |
| hydroxy ethylacrylate | 86 |
| methyl methacrylate | 126 |
| glycidyl methacrylate | 5 |
| methacrylic acid | 14 |
| methyl acrylate | 62 |
| dispersed polymer | 103 |

These ingredients were added next and the reaction held for 45 min:

| | |
|---|---|
| butanol | 12 |
| heptane | 17 |
| t-butyl peroctoate | 5 |
| mineral spirits | 31 |

Butanol (16 parts) and t-butyl peroctoate (1.7 parts) were then added over a 30 min period and the reaction was held for 60 min. Finally, the reactor was stripped of 76 parts of solvent. The particle size was 298 nm as measured by quasielastic light scattering and had a room temperature viscosity of 2 Pa·s (2000 centipoise) at 5 rpm on a Brookfield viscometer and a weight solids of 63.5 percent.

### B.) Acrylosilane Resin

The resin was made by this procedure: charge 400 g of 2 ethyl hexanol and 400 g of N-pentyl propionate to a 5 liter flask. Heat to reflux. Premix and add 896 g of styrene, 672 g of gamma-methacryl propyl trimethoxy silane, 336 g of2-ethyl hexyl methacrylate, 336 g of hydroxypropyl methacrylate, 170.2 g of 2.2(2 methyl butane nitrile), 40 g of 2 ethyl hexanol, and 40 g of N-pentyl propionate to the refluxing material over a period of six h. After the addition, hold the temperature for 30 min. Then, add a premixed blend of 40 g of 2-ethyl hexanol, 40 g of N-pentyl propionate and 9 g of 2.2(2-methyl butane nitrile) over a 30 min period. Hold the temperature for 30 min after addition, then cool and empty.

| Gardner Holt Viscosity | Weight Solids | Weight Ave. M.W. |
|---|---|---|
| X+1/2 | 73.3% | 5686 |

### C.) Cyclosilane Oligomer (i)

Place some cyclohexanedimethanol in the oven to melt. Once melted, take 294.7 g of cyclohexanedimethanol along with 0.11 g FascatR 420 (tin catalyst from Elf Atochem) and place in a flask at about 35°C. Then, add 839 g of isocyanate propyl trimethoxysilane over 75 min. Then hold for two h. Cool and empty.

| Gardner Holt Viscosity | Weight Solids | Weight Ave. M.W. |
|---|---|---|
| V | 90% | 1550 |

### D.) Silanated Star Polyester (i)

Step I: Add the following ingredients to the reactor, heat to 120°C - 125°C. Allow batch to exotherm to 145°C. If exotherm does not happen heat to 145°C. Hold for 1 h at 145°C before proceeding.

| Ingredient | | Weight |
|---|---|---|
| erythritol | 280.2 | |
| 4-methyl hexahydrophthalic anhydride | | 1037.8 |
| butyl acetate | 161.1 | |

Step II: Feed the ingredients over 30 min at 145°C. Maintain the 145°C temperature.

| | | |
|---|---|---|
| Cardura E (monoepoxy from Shell Chemical) | | 1561.9 |
| butyl acetate | 182.3 | |

Step III: Add as a shot to reactor. Heat to 175°C. Record Acid Number vs. time profile, every 30 min after reaching 175°C, until it stabilizes.

| | | |
|---|---|---|
| dibutyltin dilaurate | | 2.9 |
| butyl acetate | 71.7 | |

Step IV: Once acid number has stabilized, cool to below 100°C. Dilute with butyl acetate.

| | | |
|---|---|---|
| butyl acetate | 302 | |
| | Batch Total | 3600 |

wt. solids = 80%
Acid Number<2.

In a reaction flask, place 3720 g of the star polyester made immedietely above, 1524 g of isocyanate propyl trimethoxysilane and 0.1 g Fascat 420 catalyst. Stir for 90 minutes. Blanket the whole time with N₂.
wt. solids = 86.3
Wt. Ave M.W. = 2200

| E.) Clearcoat Composition | | 9 |
|---|---|---|
| Resimine R 6550 | | 14.43 |
| | (melamine from Monsanto) | |
| | | |
| Nonaqueous Dispersion (A) | | 26.77 |
| Acrylosilane Resin (B) | | 11.6 |
| Cyclosilane Oligomer (C) | | 22.22 |
| Silanated Star Polyester (D) | | 23.17 |
| Catalyst Solution* | | 3.55 |
| Dibutyltin Dilaurate | | 0.2 |
| Resiflow SR | | 0.4 |
| | (acrylic flow agent from Estron Chemical) | |
| Tinuvin 384 | | 2.32 |
| | (UV Screener from CIBA Geigy) | |
| Tinuvin 123 | | 2.2 |
| | (Hindered Amine light stabilizer from CIBA Geigy) | |
| | | |
| *Catalyst solution | | |
| | Cycat R 600 (sulfonic acid from American Cyanamid) | 48.0 |
| AMP-95 R (amine from Angus Chemical) | | 10.8 |
| methanol | | 41.2 |

This coating was applied over a black waterborne basecoat which had already received a warm air flash of 5 min at 82°C. The coating was cured for 30 min at 141°C. This coating exhibited good appearance, hardness, etch and mar resistance.

## Claims

1. A curable coating composition of a binder in an organic solvent, the composition having a volatile organic content not exceeding 0.4 kilograms per liter, consisting essentially of at least one solvent and
(i) a binder selected from a linear or branched cycloaliphatic moiety-containing oligomer or blend of oligomers with a weight average molecular weight not exceeding 3,000, a polydispersity not exceeding 1.5 and functionality A or A plus B; and
(ii) an oligomeric cross-linker or blend of cross-linkers with a weight average molecular weight not exceeding 3,000 and functionality C;
components (i) and (ii) reacting at cure to form a three-dimensional network having chains of substantially uniform, controllable molecular weight between cross-links ; wherein
the functionalities in components (i) and (ii) are selected from the group consisting of:
a) A is hydroxyl and C is isocyanate;
b) A is hydroxyl and C is melamine;
c) A is aldimine or ketimine, B is optionally hydroxyl and C is isocyanate;
d) A is silane, B is hydroxyl and C is melamine;
e) A is silane, B is hydroxyl and C is isocyanate; and
f) A is silane and C is silane;
wherein when A is hydroxyl the oligomers are prepared by reacting multifunctional alcohols selected from the group consisting of pentaerythritol and trimethylol propane with cyclic monomeric anhydrides to form acid oligomers, and further reacting said acid oligomers with monofunctional expoxides selected from the group consisting of butyleneoxide and propyleneoxide.

2. The composition according to claim 1, wherein the oligomer of component (i) comprises an oligomeric ester.

3. The composition according to claim 1 or claim 2, wherein component (ii) has a polydispersity not exceeding 1.5.

4. The composition according to any of claims 1 to 3, wherein said functionalities in components (i) and (ii) are: A is aldimine or ketimine, B is hydroxyl and C is isocyanate.

5. The composition according to any of claims 1 to 3, wherein said functionalities in components (i) and (ii) are: A is aldimine or ketimine and C is isocyanate.

6. The composition according to any of claims 1 to 3, wherein said functionalities in components (i) and (ii) are: A is silane and C is silane.

7. The composition according to any of claims 1 to 3, wherein said functionalities in components (i) and (ii) are: A is silane, B is hydroxyl and C is isocyanate.

8. The composition according to any of claims 1 to 7, additionally containing:
(i) up to 30 percent by weight of total binder of an acrylic polymer or polyester with a weight average molecular weight greater than 3,000; or
(ii) up to 30 percent by weight of total binder of a noncyclic oligomer with a weight average molecular weight not exceeding 3,000, a polydispersity not exceeding 1.5 and having functionality A or A plus B; or
(iii) up to 30 percent by weight of total binder of an acrylic component comprising a core of acrylic polymer and, grafted thereto, a plurality of substantially linear stabilizer components, this component containing at least 2 percent of ethylenically unsaturated monomer with functionality capable of reacting with (i), (ii), or both (i) and (ii), the core being substantially insoluble and the stabilizer components being soluble in the solvent medium.

9. A composition according to any of claims 1 to 8, additionally containing up to 200 parts by weight, based on 100 parts of (i) and (ii), of pigment.

10. A method for coating a substrate comprising applying thereto a composition according to any of claims I to 9 and curing the composition.

11. A substrate coated with the composition of any of the claims 1 to 9.

## Patentansprüche

1. Härtbare Beschichtungszusammensetzung aus einem Bindemittel in einem organischen Lösungsmittel, wobei die Zusammensetzung einen Gehalt an flüchtigen organischen Verbindungen von nicht über 0,4 Kilogramm pro Liter aufweist, die im Wesentlichen aus mindestens einem Lösemittel bestehen, sowie
(i) ein Bindemittel, ausgewählt aus einem/einer lineare oder verzweigte cycloaliphatische Reste enthaltenem/enthaltenden Oligomer oder Mischung von Oligomeren mit einem Gewichtsmittel des Molekulargewichts von nicht über 3000, einer Polydispersität von nicht über 1,5 und einer Funktionalität A oder A plus B enthält; und
(ii) ein oligomeres Vernetzungsmittel oder eine Mischung aus Vemetzungsmitteln mit einem Gewichtsmittel des Molekulargewichts von nicht über 3000 und einer Funktionalität C;
wobei die Komponenten (i) und (ii) beim Härten so reagieren, dass sie ein dreidimensionales Netz bilden, das Ketten von im Wesentlichen gleichmäßigem, steuerbarem Molekulargewicht zwischen den Vernetzungen aufweist; worin
die Funktionalitäten in den Komponenten (i) und (ii) ausgewählt sind aus der Gruppe, bestehend aus:
a) A ist Hydroxyl und C ist Isocyanat;
b) A ist Hydroxyl und C ist Melamin;
c) A ist Aldimin oder Ketimin, B ist optional Hydroxyl und C ist Isocyanat;
d) A ist Silan, B ist Hydroxyl und C ist Melamin;
e) A ist Silan, B ist Hydroxyl und C ist Isocyanat; und
f) A ist Silan und C ist Silan,
worin die Oligomere wenn A Hydroxyl ist durch Umsetzen multifunktioneller Alkohole, ausgewählt aus der Gruppe, bestehend aus Pentaerythritol und Trimethylolpropan, mit cyclischen monomeren Anhydriden zum Bilden saurer Oligomere, und ferner Umsetzen der sauren Oligomere mit monofunktionellen Epoxiden, ausgewählt aus der Gruppe, bestehend aus Butylenoxid und Propylenoxid, hergestellt werden.

2. Zusammensetzung nach Anspruch 1, worin das Oligomer der Komponente (i) einen oligomeren Ester umfasst.

3. Zusammensetzung nach Anspruch 1 oder 2, worin die Komponente (ii) eine Polydispersität aufweist, die 1,5 nicht übersteigt.

4. Zusammensetzung nach einem der Ansprüche 1 bis 3, worin die Funktionalitäten in den Komponenten (i) und (ii) sind: A ist Aldimin oder Ketimin, B ist Hydroxyl und C ist Isocyanat.

5. Zusammensetzung nach einem der Ansprüche 1 bis 3, worin die Funktionalitäten in den Komponenten (i) und (ii) sind: A ist Aldimin oder Ketimin und C ist Isocyanat.

6. Zusammensetzung nach einem der Ansprüche 1 bis 3, worin die Funktionalitäten in den Komponenten (i) und (ii) sind: A ist Silan und C ist Silan.

7. Zusammensetzung nach einem der Ansprüche 1 bis 3, worin die Funktionalitäten in den Komponenten (i) und (ii) sind: A ist Silan, B ist Hydroxyl und C ist Isocyanat.

8. Zusammensetzung nach einem der Ansprüche 1 bis 7, zusätzlich umfassend:
(i) insgesamt bis zu 30 Gew.-% Bindemittel aus einem Acrylpolymer oder Polyester mit einem Gewichtsmittel des Molekulargewichts von über 3000; oder
(ii) insgesamt bis zu 30 Gew.-% Bindemittel aus einem nicht cyclischen Oligomer mit einem Gewichtsmittel des Molekulargewichts von nicht über 3000, einer Polydispersität von nicht über 1,5 und einer Funktionalität A oder A plus B; oder
(iii) insgesamt bis zu 30 Gew.-% Bindemittel aus einer Acrylkomponente, die einen Kern aus Acrylpolymer und eine Vielzahl von darauf gepfropften, im wesentlichen linearen Stabilisatorkomponenten aufweist, wobei diese Komponente mindestens etwa 2 Prozent ethylenisch ungesättigtes Monomer mit einer Funktionalität enthält, die in der Lage ist, mit (i), (ii) oder sowohl (i) als auch (ii) zu reagieren, wobei der Kern im Wesentlichen unlöslich ist und die Stabilisatorkomponenten im Lösungsmittelmedium löslich sind.

9. Zusammensetzung nach einem der Ansprüche 1 bis 8, die, bezogen auf 100 Teile (i) und (ii), zusätzlich bis zu 200 Gewichtsteile Pigment umfasst.

10. Verfahren zum Beschichten eines Substrats, welches das Aufbringen einer Zusammensetzung nach Anspruch 1 auf dieses und das Härten der Zusammensetzung umfasst.

11. Substrat, beschichtet mit der Zusammensetzung nach einem der Ansprüche 1 bis 9.

## Revendications

1. Composition de revêtement durcissable d'un liant dans un solvant organique, la composition ayant une teneur en composants organiques volatils ne dépassant pas 0,4 kilogrammes par litre, constituée essentiellement d'au moins un solvant et
(i) d'un liant sélectionné parmi un oligomère contenant une fraction cyclo aliphatique linéaire ou ramifiée ou un mélange d'oligomères, ayant un poids moléculaire moyen en poids ne dépassant pas 3 000, une polydispersité ne dépassant pas 1,5 et une fonctionnalité A ou A plus B; et
(ii) d'un agent réticulant oligomère ou d'un mélange d'agents de réticulation, ayant un poids moléculaire moyen en poids ne dépassant pas 3000 et une fonctionnalité C;
les composants (i) et (ii) réagissant lors du durcissement pour former un réseau tri-dimensionnel ayant des chaînes d'un poids moléculaire contrôlable, substantiellement uniforme entre les éléments réticulants; dans laquelle
les fonctionnalités dans les composants (i) et (ii) sont sélectionnées parmi le groupe constitué de:
a) A est un hydroxyle et C est un isocyanate;
b) A est un hydroxyle et C est une mélamine;
c) A est une aldimine ou une cétimine, B est, en option, un hydroxyle et C est un isocyanate;
d) A est un silane, B est un hydroxyle et C est une mélamine;
e) A est un silane, B est un hydroxyle et C est un isocyanate; et
f) A est un silane et C est un silane ;
dans lequel, lorsque A est un hydroxyle, les oligomères sont préparés en faisant réagir des alcools multifonctionnels sélectionnés à partir du groupe constitué de érythritole et de propane triméthylole avec des anhydrides monomériques cycliques afin de former des oligomères acides, et en outre en faisant réagir lesdits oligomères acides avec des époxydes monofonctionnels sélectionnés à partir du groupe constitué de benzoxyde butyle et d'oxyde propylène.

2. Composition selon la revendication 1, dans laquelle l'oligomère du composé (i) comprend un ester oligomère.

3. Composition selon la revendication 1 ou la revendication 2, dans laquelle le composant (ii) a une polydispersité ne dépassant pas 1,5.

4. Composition selon l'une quelconque des revendications 1 à 3, dans laquelle lesdites fonctionnalités dans les composants (i) et (ii) sont: A est une aldimine ou une cétimine, B est un hydroxyle et C est un isocyanate.

5. Composition selon l'une quelconque des revendications 1 à 3, dans laquelle lesdites fonctionnalités dans les composants (i) et (ii) sont: A est une aldimine ou une cétimine et C est un isocyanate.

6. Composition selon l'une quelconque des revendications 1 à 3, dans laquelle lesdites fonctionnalités dans les composants (i) et (ii) sont: A est un silane et C est un silane.

7. Composition selon l'une quelconque des revendications 1 à 3, dans laquelle lesdites fonctionnalités dans les composants (i) et (ii) sont: A est un silane, B est un hydroxyle et C est un isocyanate.

8. Composition selon l'une quelconque des revendications 1 à 7, comprenant en outre:
(i) jusqu'à 30 pour cent en poids de liant total d'un polymère acrylique ou d'un polyester, ayant un poids moléculaire moyen en poids supérieur à 3000; ou
(ii) jusqu'à 30 pour cent en poids de liant total d'un oligomère non cyclique, ayant un poids moléculaire moyen en poids ne dépassant pas 3000, une polydispersité ne dépassant pas 1,5 et ayant une fonctionnalité A ou A plus B; ou
(iii) jusqu'à 30 pour cent en poids de liant total d'un polymère acrylique comprenant un noyau de polymère acrylique et, greffé sur ce dernier, une pluralité de composants de stabilisation substantiellement linéaires, ce composant contenant au moins 2 pour cent de monomère à insaturation éthylénique, ayant une fonctionnalité capable de réagir avec (i), (ii) ou (i) et (ii) à la fois, le noyau étant substantiellement insoluble et les composants de stabilisation étant solubles dans le milieu de solvants.

9. Composition selon l'une quelconque des revendications 1 à 8, comprenant en outre jusqu'à 200 parts en poids, sur la base de 100 parts de (i) et de (ii), de pigment.

10. Procédé de revêtement d'un substrat comprenant l'application sur ce dernier d'une composition selon l'une quelconque des revendications 1 à 9 et de durcissement de la composition.

11. Substrat revêtu de la composition selon l'une quelconque des revendications 1 à 9.
